# FASCICULE DE BREVET EUROPEEN

(11) **EP 1 600 670 B1**
(45) Date de publication et mention de la délivrance du brevet: **28.09.2011**
(21) Numéro de dépôt: 05300417.2
(22) Date de dépôt: 26.05.2005
(51) Int. Cl.: F16H 61/20

(54) **Dispositif de régulation de la pression dans un récepteur hydralique**
Hydraulische Druckregelvorrichtung für einen hydraulischen Verbraucher
Pressure regulating device for a hydraulic actuator

(30) Priorité: 26.05.2004 FR 0405674
(43) Date de publication de la demande: 30.11.2005
(73) Titulaire: Renault s.a.s., 92100 Boulogne Billancourt (FR)
(72) Inventeur: TURPIN, Thomas, 91400, ORSAY (FR)
(74) Mandataire: Rougemont, Bernard

(56) Documents cités:
- EP-A- 1 136 727
- US-A- 4 775 938
- US-A- 5 272 630
- US-A- 5 916 058

## Description

La présente invention concerne un procédé et un dispositif de régulation de la pression dans un récepteur hydraulique.

L'invention se rapporte particulièrement aux transmissions automatisées à train épicycloïdal ou à rapport de démultiplication continûment variable, équipées d'un convertisseur de couple hydraulique et faisant partie des groupes motopropulseurs comprenant aussi bien un moteur du type à allumage commandé, qu'un moteur du type allumage par compression, ou qu'un moteur électrique, ou aux groupes motopropulseurs associant les deux types de moteurs (à combustion interne et électrique), dits "hybrides".

La commande des transmissions selon l'invention comporte un système de contrôle (calculateur électronique pilotant la transmission ou l'ensemble du groupe motopropulseur), et permet de réaliser la prestation de "débrayage à l'arrêt" ou de "réduction de traînée à l'arrêt".

A l'arrêt, les freins du véhicule étant activés, le moteur tournant, et un rapport de marche avant ou de marche arrière établi, lorsque les récepteurs hydrauliques concernés en prise garantissent la transmission du couple le long de la chaîne de transmission, les véhicules équipés de boîtes automatiques à train épicycloïdal ou à rapport continûment variable et dotés d'un convertisseur, sont soumis à un couple important (dû à la multiplication du couple prélevé au moteur par le convertisseur de couple, dans la chaîne de transmission). Ce couple peut être modulé par des oscillations liées par exemple à l'acyclisme de combustion, qui, elles aussi démultipliées par le convertisseur, excitent les modes propres de la carrosserie, et conduisent au "bourdonnement" de la caisse du véhicule. De plus, la dissipation d'énergie correspondante du fait du cisaillement de l'huile dans le convertisseur conduit à une consommation inutile de carburant.

L'opération de "débrayage à l'arrêt" ou de "réduction de traînée à l'arrêt" consiste à empêcher la transmission et l'amplification des causes de ce bourdonnement en découplant la transmission du moteur. Les difficultés rencontrées concernant les phases d'entrée et de sortie du mode de débrayage à l'arrêt, pendant lesquelles il est difficile de gérer l'évolution du couple transmis en évitant notamment les variations brusques de celui-ci, qui se traduisent par des à-coups ressentis par le conducteur et les passagers, nuisant donc au confort de roulage.

Les dispositifs de débrayage à l'arrêt connus aujourd'hui s'appuient essentiellement sur deux types de solutions, l'une mécanique, l'autre hydraulique.

La solution mécanique repose sur l'insertion en série au sens de la transmission du couple d'un mécanisme de "roue libre", dont le principe de fonctionnement est que lorsque le couple résistant en sortie dépasse le couple en entrée, ce dernier n'est plus transmis par construction. De ce fait, le comportement de ce type de dispositif est discontinu dans la transmission du couple lors des phases transitoires: dès que le couple d'entrée dépasse le couple résistant, le couple d'entrée est brutalement transmis à nouveau.

Les solutions hydrauliques consistent à réguler la pression dans le récepteur hydraulique en série au sens de la transmission du couple, souvent au moyen d'une électrovanne spécifique, dédiée à la fonction de débrayage à l'arrêt (ce qui impose une complication du distributeur hydraulique et l'emploi d'un actionneur spécifique pour assurer la commandabilité de la pression régnant dans le récepteur).

D'autres solutions hydraulique telle que celle décrite dans U5 5 916 058, divulguant toutes les caractéristiques du préambule des revendications 1 et 8, permettent d'ajuster la pression du récepteur en prise au sens de la transmission du couple par une consigne déterminée en fonction des régimes de rotation du moteur et de la turbine du convertisseur sachant que ce dernier rejoint le premier à un écart près (dû au rendement du convertisseur), lorsque la transmission est découplée du convertisseur pendant le mode de débrayage à l'arrêt. En effet, le régime de la turbine, hors débrayage à l'arrêt, est nul (la turbine étant liée mécaniquement aux roues freinées), mais se rapproche du régime moteur à mesure que la transmission du couple est interrompue pendant une phase d'entrée dans le mode de débrayage à l'arrêt. Pendant la phase de maintien, la pression est pilotée de façon à maintenir le régime turbine dans un voisinage du régime moteur.

Une autre solution (cf. demande de brevet français n° 00 03697 ou publication EP1136727) consiste à faire battre une électrovanne de séquence de type "tout ou rien" avec un rapport cyclique d'ouverture variable comme une électrovanne de modulation (Pulse Wide Modulation), ce qui permet de piloter la pression du récepteur en prise. En réalité, ce type de pilotage n'est pas performant du fait que les électrovannes de séquences (EVS) ne sont pas capables de supporter un pilotage en PWM: d'une part le temps de réponse des EVS est trop important et d'autre part le nombre de sollicitation des EVS est grandement augmenté lors d'une utilisation en PWM par rapport à une utilisation classique, ce qui n'est pas compatible avec les technologies actuelles utilisées dans la fabrication des EVS.

Le but de la présente invention est d'améliorer le pilotage fin de l'évolution du couple que transmettent les éléments de friction du récepteur hydraulique en série au sens de la transmission du couple, placés donc entre le convertisseur et le reste de la chaîne cinématique au moyen d'une loi de commande de la pression appliquée à ce récepteur et ce sans avoir besoin de réaliser un circuit hydraulique de la commande spécifique à la prestation de débrayage à l'arrêt, sans utiliser d'électrovanne de modulation spécifique, et sans utiliser non plus de capteur mesurant la pression s'exerçant sur les éléments de friction du récepteur concerné.

Cette stratégie de contrôle est caractérisée par un pilotage de deux électrovannes de séquences destinées soit à appliquer en totalité la pression de ligne aux éléments de friction du récepteur, soit à vidanger la pression déjà appliquée à ce même récepteur. La nouveauté par rapport au dispositif décrit dans la demande de brevet français n° 00 03697 est que pendant la phase de maintien du débrayage à l'arrêt, on utilise une stratégie spécifique de battement des électrovannes de séquences différente d'une utilisation en PWM.

L'invention propose donc un nouveau mode de régulation de la pression hydraulique d'un récepteur hydraulique en phase établie de débrayage à l'arrêt étant entendu que l'invention ne concerne pas les phases d'entrée et de sortie du mode. L'objectif étant soit de réguler un glissement donné (Régime moteur - Régime turbine), soit de maintenir une pression telle que la force délivrée soit légèrement supérieure à celle délivrée par les ressorts de rattrapage de jeu des éléments de friction du récepteur, ceci afin de préparer la sortie de mode pour que celle-ci se fasse le plus rapidement possible et sans à coups.

L'invention concerne ainsi un procédé de régulation de la pression dans un récepteur hydraulique de transmission automatisée de véhicule automobile pendant la phase de débrayage à l'arrêt lorsqu'un rapport est engagé, ledit récepteur hydraulique transmettant le couple fourni par un convertisseur de couple hydraulique placé en sortie d'un moteur, des moyens de régulation commandables permettant d'augmenter, respectivement de diminuer, la pression hydraulique régnant dans ledit récepteur hydraulique.

Suivant l'invention, ce procédé de commande est caractérisé en ce qu'il consiste à activer temporairement et de manière répétée un premier moyen de régulation (8) pour diminuer la pression et un deuxiéme moyen de régulation (9) pour augmenter la pression dudit récepteur hydraulique en fonction de la dérivée instantanée du régime de la turbine et de la valeur instantanée du glissement entre le régime du moteur et le régime de la turbine du convertisseur, tout en commandant un régulateur de pression de ligne fournissant une pression de ligne au moyen de régulation pour augmenter la pression, le moyen de régulation étant connecté à une bâche de vidange. On provoque de cette manière une augmentation temporaire, respectivement une diminution temporaire, de la pression hydraulique dans ledit récepteur hydraulique. Une régulation de la pression est donc possible lorsque, en l'absence d'activation desdits moyens de régulation, la pression hydraulique diminue, respectivement augmente.

Les moyens de régulation comportent d'une part des moyens permettant d'augmenter la pression et d'autre part des moyens permettant de réduire la pression dans le récepteur hydraulique. Pour simplifier la commande de ces moyens et le processus de régulation, on active de préférence uniquement les moyens permettant d'augmenter la pression, les moyens permettant de réduire la pression n'étant pas activés, ou uniquement les moyens permettant de réduire la pression, les moyens permettant d'augmenter la pression n'étant pas activés. De préférence, lesdits moyens de régulation comprennent deux électrovannes, l'une permettant par activation une augmentation de la pression dans ledit récepteur, l'autre permettant par activation une diminution de la pression dans ledit récepteur

Selon un mode de réalisation avantageux du procédé selon l'invention, lorsque, en l'absence d'activation desdits moyens de régulation, la pression hydraulique augmente, lesdits moyens de régulation permettant une diminution de pression hydraulique sont activés en fonction de la valeur instantanée du glissement. Le but est ici d'obtenir une régulation de la valeur du glissement par régulation sur la pression hydraulique, puisque une diminution de la pression hydraulique dans le récepteur engendre une diminution correspondante du glissement.

Selon un mode de réalisation particulier, le procédé selon l'invention les moyens de régulation permettant une diminution de pression hydraulique sont activés lorsque la valeur instantanée du glissement devient supérieure à une valeur de seuil haut et sont désactivés lorsque la valeur instantanée du glissement devient inférieure à une valeur de seuil bas.

Selon un mode de réalisation avantageux du procédé selon l'invention, lorsque, en l'absence d'activation desdits moyens de régulation, la pression hydraulique diminue, la durée d'activation desdits moyens de régulation permettant une augmentation de pression hydraulique est modulée en fonction de la dérivée instantanée du régime de la turbine, leur durée d'inactivation étant fixe. Selon une variante, la durée d'inactivation desdits moyens de régulation permettant une augmentation de pression hydraulique est modulée en fonction de la dérivée instantanée du régime de la turbine, leur durée d'activation étant fixe. L'objectif est ici d'obtenir un maintien de la pression hydraulique à une valeur suffisamment élevée permettant d'éviter la fermeture du récepteur hydraulique.

Selon un mode de réalisation particulier, le procédé selon l'invention consiste en outre à déterminer la valeur maximale prise pendant une durée déterminée par la valeur absolue de la dérivée instantanée du régime de la turbine lorsque celle-ci est négative, la durée d'activation des moyens de régulation permettant une augmentation de pression hydraulique étant :
- fixée à une valeur prédéterminée lorsque ladite valeur maximale est supérieure à un seuil haut prédéterminé,
- augmentée par rapport à ladite valeur prédéterminée lorsque ladite valeur maximale est inférieure à un seuil bas prédéterminé,
- diminuée par rapport à ladite valeur prédéterminée lorsque ladite valeur maximale est supérieure audit seuil bas et inférieure audit seuil haut. L'invention a également pour objet un dispositif pour la mise en oeuvre du procédé selon l'invention, comprenant un moteur, un convertisseur de couple hydraulique placé en sortie du moteur, un récepteur hydraulique transmettant le couple fourni par le convertisseur, des moyens de régulation commandables permettant d'augmenter ou de diminuer la pression hydraulique régnant dans ledit récepteur hydraulique, caractérisé en ce qu'il comprend des moyens pour détecter, pendant la phase de débrayage à l'arrêt, le glissement entre le régime du moteur et le régime de la turbine du convertisseur, des moyens pour calculer la dérivée instantanée du régime de la turbine du convertisseur, ainsi que des moyens pour piloter lesdits moyens de régulation en fonction de la dérivée instantanée du régime de la turbine du convertisseur et du glissement.

Selon un mode de réalisation particulièrement avantageux, les moyens de régulation comprennent deux électrovannes qui sont reliées à un circuit d'alimentation alimentant le récepteur hydraulique. L'une des électrovannes permet d'augmenter la pression dans le circuit d'alimentation et donc dans le récepteur hydraulique, tandis que l'autre permet de réduire cette pression. La pression régnant dans le circuit d'alimentation augmente et diminue « naturellement » en l'absence d'activation de ces électrovannes en raison d'un débit de réalimentation supérieur ou inférieur au débit de fuite.

Selon une autre particularité de l'invention, le dispositif comprend des moyens pour commander le fonctionnement des électrovannes qui sont adaptés soit pour appliquer en totalité la pression hydraulique sur les éléments de friction du récepteur soit pour vidanger la pression hydraulique déjà appliquée sur ces éléments de friction, pendant la phase de débrayage à l'arrêt. De préférence, la commande des deux électrovannes est assurée par l'unité de pilotage de la transmission.

D'autres particularités et avantages de l'invention apparaîtront encore tout au long de la description ci-après.

Aux dessins annexés, donnés à titre d'exemples, non limitatifs:
- la figure 1 montre le schéma d'ensemble du dispositif de commande selon l'invention,
- la figure 2 représente des courbes montrant l'évolution du glissement, de la pression dans le récepteur et de l'état de l'électrovanne de séquence EVS1 en fonction du temps (t),
- la figure 3 représente des courbes montrant l'évolution des régimes (moteur et turbine), de la variable D-Rt et de l'état de la seconde électrovanne de séquence EVS2 en fonction du temps.

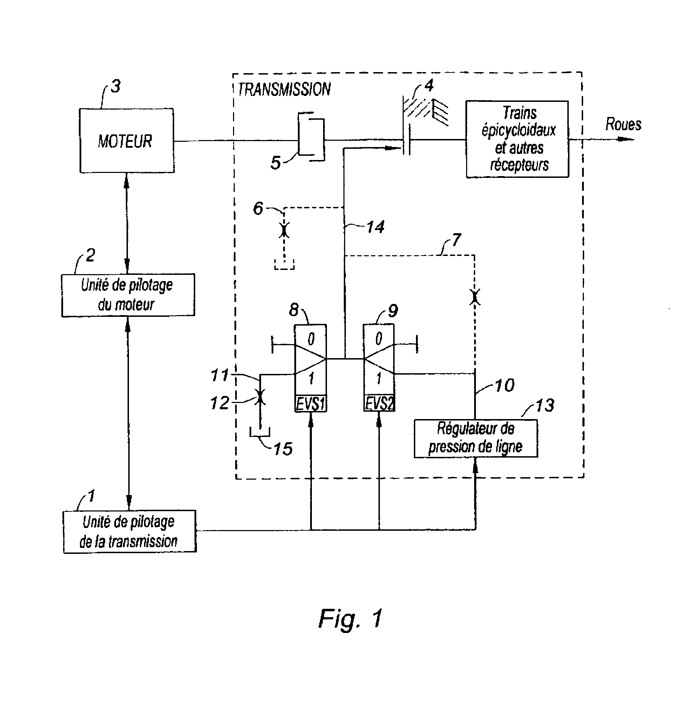

Le système représenté sur la figure 1 comporte un moteur 3 piloté par une unité de pilotage 2, lié à une transmission automatique par l'intermédiaire d'un convertisseur de couple hydraulique 5. La transmission possède au moins un récepteur 4 (frein ou embrayage) qui transmet un couple dépendant de la pression contenue dans le circuit 14 d'un distributeur hydraulique. Ce circuit 14 est relié à deux électrovannes de séquences (EVS) à deux états (8 et 9), pilotées en tout ou rien par l'unité de pilotage de la transmission 1.

Lorsque ces deux électrovannes ne sont pas alimentées (position 0), la pression contenue dans le circuit 14 est isolée (il n'y a ni alimentation, ni vidange voulues). Ce circuit n'est soumis qu'à ses fuites ou alimentations "parasites". Les fuites sont représentées par le circuit 6 et les réalimentations par le circuit 7.

Lorsque l'électrovanne de séquence 8 est alimentée (position 1), le circuit 14 est vidangé lentement par le circuit 11 qui relie le circuit 14 à la bâche 15 par l'intermédiaire d'un trou calibré 12. A l'inverse, lorsque l'électrovanne de séquence 9 est alimentée (position 1), le circuit 14 est alimenté par la pression de ligne (fournie par le régulateur de pression de ligne 13] par l'intermédiaire du circuit 10.

Le principe de régulation en phase de réduction de traînée à l'arrêt établie se décompose en deux, selon que, lorsque le récepteur 4 est alimenté par le circuit isolé 14 (les deux électrovannes de séquences 8 et 9 ne sont pas alimentées), la pression dans ce circuit augmente (le niveau de réalimentation est supérieur au niveau de fuites) ou diminue (le niveau de fuites est supérieur au niveau de réalimentation). Le choix de la stratégie utilisée est déterminé par l'unité de pilotage 1 de la transmission lorsque les deux électrovannes de séquences 8 et 9 ne sont pas alimentées.

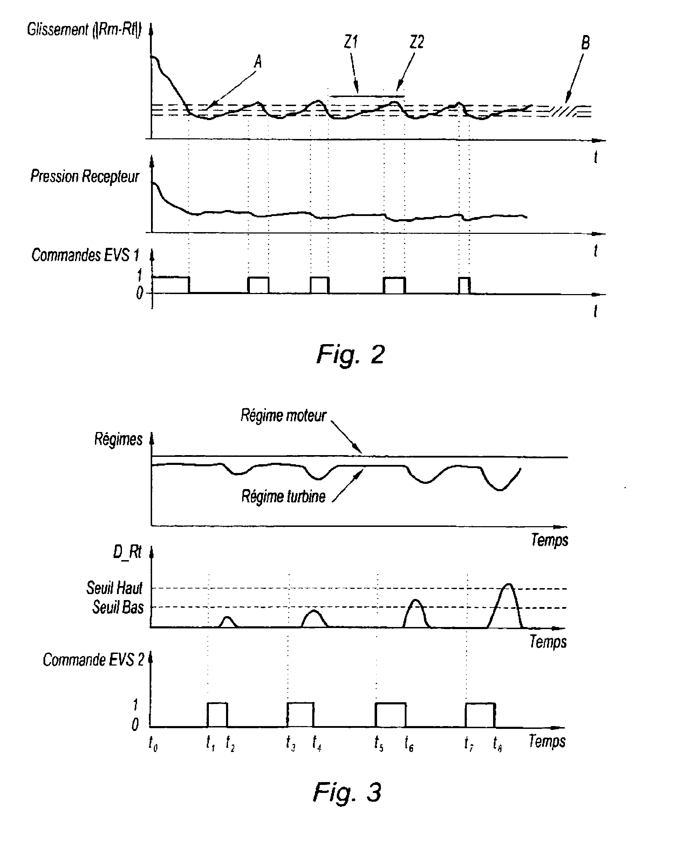

La figure 2 illustre le cas où le niveau des réalimentations est supérieur au niveau des fuites.

Dans cette configuration, la pression dans le récepteur 4 augmente naturellement lorsque les deux électrovannes 8 et 9 (figure 1) ne sont pas alimentées car les réalimentations venant de la pression de ligne (principalement par les jeux de vannes représentés par le circuit 7 de la figure 1) sont supérieures aux fuites vers la bâche (représentées par le circuit 6 de la figure 1). Le principe de régulation est représenté sur la figure 2: une consigne de glissement A (régime moteur - régime turbine) est déterminée par l'unité de pilotage 1 de la boîte de vitesses. Cette consigne peut être fonction de différents paramètres tels que la température de l'huile de la boite ou le régime moteur par exemple. Une zone d'hystérésis B est associée à cette consigne de glissement. Selon la position du glissement entre le régime moteur et le régime turbine par rapport à cette consigne de glissement A, l'électrovanne de séquence 8 va être activée ou non.
- si le glissement est inférieur à la consigne A (en prenant en compte la zone d'hystérésis B, c'est-à-dire inférieur à un seuil bas A - δA), l'électrovanne de séquence 8 n'est pas activée et la pression augmente par l'effet des réalimentations, ce qui provoque l'augmentation du glissement (zone Z1 de la figure 2).
- dès que le glissement devient supérieur à la consigne de glissement A (en prenant en compte la zone d'hystérésis B, c'est-à-dire supérieur à un seuil haut A + δA), l'électrovanne de séquence 8 est alimentée, ce qui provoque une diminution de la pression (vidange lente par le circuit 11 de la figure 1). Le glissement diminue (zone Z2 de la figure 2).

La figure 3 illustre le cas où le niveau des fuites est supérieur au niveau des réalimentations. On détecte que l'on est dans cette situation si le glissement est inférieur à un seuil prédéterminé, inférieur au seuil bas A - 8A.

Dans cette configuration, la pression dans le récepteur 4 diminue naturellement lorsque les deux électrovannes 8 et 9 (figure 1) ne sont pas alimentées car les réalimentations venant de la pression de ligne (principalement par les jeux de vannes, représentés par le circuit 6 de la figure 1) sont inférieures aux fuites vers la bâche (représentées par le circuit 6 de la figure 1). Le principe de régulation est représenté sur la figure 3. Il s'agit de maintenir une pression telle que la force appliquée soit légèrement supérieure à celle délivrée par les ressorts de rattrapage de jeu des éléments de friction. Pour cela, l'idéal est d'augmenter la pression dans le récepteur (donc dans le circuit 14) dés qu'il y a une fuite et d'arrêter d'augmenter la pression dés que le récepteur devient capacitif, c'est à dire dès que le récepteur commence à transmettre aux roues une partie du couple moteur. La difficulté est que, dans le cas d'un circuit hydraulique tel que décrit dans la figure 1 où aucun capteur de pression dans le circuit d'alimentation du récepteur n'est présent, il n'y a aucun moyen de savoir quand la pression dans le récepteur n'est plus suffisante. Par contre, on peut savoir quand elle est trop importante en observant les variations du régime turbine : la pression devenant suffisante pour vaincre le ressort de rappel, le récepteur commence à se refermer et à transmettre du couple aux roues, ce qui occasionne une diminution du régime turbine (pour rappel, le régime turbine est égal à 0 lorsque le récepteur est entièrement fermé). C'est cette propriété qui va être utilisée pour la régulation en phase de réduction de traînée à l'arrêt établie.

On définit une variable de D-Rt telle qu'elle est égale à 0 si la dérivée instantanée du régime turbine est positive et est égale à la valeur absolue de la dérivée instantanée du régime turbine si celle-ci est négative. Selon la valeur que prend cette variable D-Rt, l'électrovanne de séquence 9 va être alimentée plus ou moins longtemps selon le principe suivant:
- l'unité de pilotage 1 de la boîte de vitesses définit une durée pendant laquelle l'électrovanne de séquence 9 n'est pas alimentée. Cette durée peut dépendre de différents paramètres tels que la température de l'huile, la pression de ligne ou le régime moteur par exemple. On retrouve cet état sur la figure 3 entre t₀ et t₁, t₂ et t₃, t₄ et t₅, et t₆ et t₇.
- Durant ces périodes où l'électrovanne de séquence 9 n'est pas alimentée, on observe la rapidité de diminution du régime turbine (variable D-Rt).
- Selon la valeur maximum observée de la variable D-Rt, on modifie la durée pendant laquelle l'électrovanne de séquence 9 est alimentée:
   - Si la valeur est faible (inférieure à un seuil bas déterminé par l'unité de pilotage de la boîte de vitesses), le récepteur ne transmet pas ou peu de couple, la durée pendant laquelle l'électrovanne de séquence 9 est alimentée doit être augmentée d'une valeur définie par l'unité de pilotage de la boîte de vitesses (cas des durées t₃ t₄ et t₅ t₆ de la figure 3).
   - Si la valeur est moyenne (comprise entre un seuil bas et un seuil haut), le récepteur transmet suffisamment de couple, la durée pendant laquelle l'électrovanne de séquence 9 est alimentée doit être diminuée d'une valeur définie par l'unité de pilotage de la boîte de vitesses (cas de la durée t₇ t₈ de la figure 3).
   - Si la valeur est haute (supérieure au seuil haut), le récepteur transmet trop de couple, la durée pendant laquelle l'électrovanne de séquence 9 est alimentée doit être réinitialisée à une valeur définie par l'unité de pilotage de la boîte de vitesses.

Un autre principe de régulation pourrait être de garder la durée pendant laquelle l'électrovanne de séquence 9 est alimentée fixe et de faire varier la durée pendant laquelle l'électrovanne de séquence 9 n'est pas alimentée.

## Revendications

1. Procédé de régulation de la pression dans un récepteur hydraulique (4) de transmission automatisée de véhicule automobile pendant la phase de débrayage à l'arrêt lorsqu'un rapport est engagé, ledit récepteur hydraulique (4) transmettant le couple fourni par un convertisseur (5) de couple hydraulique placé en sortie d'un moteur (3), des moyens de régulation (8, 9) commandables permettant d'augmenter, respectivement de diminuer, la pression hydraulique régnant dans ledit récepteur hydraulique (4), **caractérisé en ce qu'**il consiste à activer temporairement et de manière répétée un premier moyen de régulation (8) pour diminuer la pression et un deuxiéme moyen de régulation (9) pour augmenter la pression dudit récepteur hydraulique (a) en fonction de la dérivée instantanée du régime de la turbine et de la valeur instantanée du glissement entre le régime du moteur (3) et le régime de la turbine du convertisseur (5), tout en commandant un régulateur de pression de ligne (13) fournissant une pression de ligne au moyen de régulation (9) pour augmenter la pression, le moyen de régulation (8) étant connecté à une bâche (15) de vidange.

2. Procédé de commande selon la revendication 1 **caractérisé en ce que** lorsque, en l'absence d'activation desdits moyens de régulation (8, 9), la pression hydraulique diminue, la durée d'activation dudit deuxième moyen de régulation (9) permettant une augmentation de pression hydraulique est modulée en fonction de la dérivée instantanée du régime de la turbine, sa durée d'inactivation étant fixe.

3. Procédé de commande selon la revendication 1 **caractérisé en ce que** lorsque, en l'absence d'activation desdits moyens de régulation (8, 9), la pression hydraulique diminue, la durée d'inactivation dudit deuxième moyen de régulation (9) permettant une augmentation de pression hydraulique est modulée en fonction de la dérivée instantanée du régime de la turbine, sa durée d'activation étant fixe.

4. Procédé de commande selon l'une des revendications 1 à 3 **caractérisé en ce que** lorsque, en l'absence d'activation desdits moyens de régulation (8, 9), la pression hydraulique augmente, ledit premier moyen de régulation (8) permettant une diminution de pression hydraulique est activé en fonction de la valeur instantanée du glissement.

5. Procédé de commande selon la revendication 2 **caractérisé en ce que** ledit procédé consiste en outre à déterminer la valeur maximale prise pendant une durée déterminée par la valeur absolue de la dérivée instantanée du régime de la turbine lorsque celle-ci est négative, la durée d'activation dudit deuxième moyen de régulation (9) permettant une augmentation de pression hydraulique étant :
- fixée à une valeur prédéterminée lorsque ladite valeur maximale est supérieure à un seuil haut prédéterminé,
- augmentée par rapport à ladite valeur prédéterminée lorsque ladite valeur maximale est inférieure à un seuil bas prédéterminé,
- diminuée par rapport à ladite valeur prédéterminée lorsque ladite valeur maximale est supérieure audit seuil bas et inférieure audit seuil haut.

6. Procédé de commande selon la revendication 4 **caractérisé en ce que** ledit premier moyen de régulation (8) permettant une diminution de pression hydraulique est activé lorsque la valeur instantanée du glissement devient supérieure à une valeur de seuil haut (A + δA) et est désactivé lorsque la valeur instantanée du glissement devient inférieure à une valeur de seuil bas (A - SA).

7. Procédé de commande selon l'une des revendications précédentes **caractérisé en ce que** lesdits moyens de régulation (8, 9) comprennent deux électrovannes, l'une (9) permettant par activation une augmentation de la pression dans ledit récepteur, l'autre (8) permettant par activation une diminution de la pression dans ledit récepteur.

8. Dispositif pour la mise en oeuvre du procédé selon l'une quelconque des revendications précédentes, comprenant un moteur (3), un convertisseur (5) de couple hydraulique placé en sortie du moteur (3), un récepteur hydraulique transmettant le couple fourni par le convertisseur (5), des moyens de régulation (8, 9) commandables permettant d'augmenter ou de diminuer la pression hydraulique régnant dans ledit récepteur hydraulique, des moyens pour détecter, pendant la phase de débrayage à l'arrêt, le glissement entre le régime du moteur (3) et le régime de la turbine, des moyens (1) pour calculer la dérivée instantanée du régime de la turbine du convertisseur (5) **caractérisé en ce qu'**il comprend des moyens (1) pour piloter lesdits moyens de régulation en fonction de la dérivée instantanée du régime de la turbine du convertisseur (5) et du glissement et **en ce que** les moyens de régulation (8, 9) comprennent deux électrovannes (8, 9) qui sont reliées à un circuit d'alimentation (14) alimentant ledit récepteur hydraulique (4), l'une (9) permettant par activation une augmentation de la pression dans ledit récepteur, l'autre (8) permettant par activation une diminution de la pression.

9. Dispositif de commande selon la revendication 8, **caractérisé en ce que** les électrovannes fonctionnent en tout ou rien et sont connectées à un régulateur de pression de ligne (13) commandé au moyen d'une unité de pilotage de la transmission (1) de sorte que lorsque l'électrovanne de séquence (8) est alimentée (position 1), un circuit (14) est vidangé lentement par le circuit (11) qui relie le circuit (14) à une bâche (15) par l'intermédiaire d'un trou calibré (12) ; et à l'inverse, lorsque l'électrovanne de séquence (9) est alimentée (position 1), le circuit (14) est alimenté par la pression de ligne fournie par le régulateur de pression de ligne (13) par l'intermédiaire d'un circuit (10).

## Claims

1. Method for regulating the pressure in a hydraulic slave cylinder (4) of an engine vehicle automatic transmission during the clutch phase when stopping when a gear is engaged, said hydraulic slave cylinder (4) transmitting the torque supplied by a hydraulic torque converter (5) placed at the output of an engine (3), controllable regulation means (8, 9) making it possible to increase, respectively reduce, the hydraulic pressure prevailing in said hydraulic slave cylinder (4), **characterized in that** it consists in temporarily and repeatedly activating a first regulation means (8) to reduce the pressure and a second regulation means (9) to increase the pressure of said hydraulic slave cylinder (4) according to the instantaneous drift of the speed of the turbine and to the instantaneous value of the slip between the speed of the engine (3) and the speed of the turbine of the converter (5), while controlling a line pressure regulator (13) supplying a line pressure to the regulation means (9) to increase the pressure, the regulation means (8) being connected to a drainage tank (15).

2. Control method according to Claim 1, **characterized in that**, when, in the absence of activation of said regulation means (8, 9), the hydraulic pressure decreases, the activation time of said second regulation means (9) allowing for an increase in the hydraulic pressure is modulated according to the instantaneous drift of the speed of the turbine, its inactivation time being fixed.

3. Control method according to Claim 1, **characterized in that**, when, in the absence of activation of said regulation means (8, 9), the hydraulic pressure decreases, the inactivation time of said second regulation means (9) allowing for an increase in the hydraulic pressure is modulated according to the instantaneous drift of the speed of the turbine, its activation time being fixed.

4. Control method according to one of Claims 1 to 3, **characterized in that**, when, in the absence of activation of said regulation means (8, 9), the hydraulic pressure increases, said first regulation means (8) allowing for a reduction in the hydraulic pressure is activated according to the instantaneous value of the slip.

5. Control method according to Claim 2, **characterized in that** said method also consists in determining the maximum value assumed for a determined time by the absolute value of the instantaneous drift of the speed of the turbine when the latter is negative, the activation time of said second regulation means (9) allowing for an increase in the hydraulic pressure being:
- fixed at a predetermined value when said maximum value is higher than a predetermined high threshold,
- increased relative to said predetermined value when said maximum value is lower than a predetermined low threshold,
- reduced relative to said predetermined value when said maximum value is higher than said low threshold and lower than said high threshold.

6. Control method according to Claim 4, **characterized in that** said first regulation means (8) allowing for a reduction in the hydraulic pressure is activated when the instantaneous value of the slip becomes higher than a high threshold value (A + δA) and is deactivated when the instantaneous value of the slip becomes lower than a low threshold value (A - δA).

7. Control method according to one of the preceding claims, **characterized in that** said regulation means (8, 9) comprise two solenoid valves, one (9) allowing, by activation, an increase in the pressure in said slave cylinder, the other (8) allowing, by activation, a reduction of the pressure in said slave cylinder.

8. Device for implementing the method according to any one of the preceding claims, comprising an engine (3), a hydraulic torque converter (5) placed at the output of the engine (3), a hydraulic slave cylinder transmitting the torque supplied by the converter (5), controllable regulation means (8, 9) making it possible to increase or reduce the hydraulic pressure prevailing in said hydraulic slave cylinder, means for detecting, during the clutch phase when stopping, the slip between the speed of the engine (3) and the speed of the turbine, means (1) for computing the instantaneous drift of the speed of the turbine of the converter (5), **characterized in that** it comprises means (1) for driving said regulation means according to the instantaneous drift of the speed of the turbine of the converter (5) and the slip and **in that** the regulation means (8, 9) comprise two solenoid valves (8, 9) which are linked to a power supply circuit (14) powering said hydraulic slave cylinder (4), one (9) allowing, by activation, an increase in the pressure in said slave cylinder, the other (8) allowing, by activation, a reduction of the pressure.

9. Control device according to Claim 8, **characterized in that** the solenoid valves operate in all-or-nothing mode and are connected to a line pressure regulator (13) controlled by means of a unit for driving the transmission (1) so that, when the sequence solenoid valve (8) is powered (position 1), a circuit (14) is drained slowly by the circuit (11) which links the circuit (14) to a tank (15) via a nozzle (12); and, conversely, when the sequence solenoid valve (9) is powered (position 1), the circuit (14) is supplied by the line pressure supplied by the line pressure regulator (13) via a circuit (10).

## Patentansprüche

1. Verfahren zur Druckregelung in einem hydraulischen Verbraucher (4) eines automatisierten Kraftfahrzeuggetriebes während der Ausrückphase beim Anhalten mit eingelegtem Gang, wobei der hydraulische Verbraucher (4) das von einem hydraulischen Drehmomentwandler (5), der am Ausgang eines Motors (3) platziert ist, gelieferte Drehmoment überträgt, wobei betätigbare Regelmittel (8, 9) gestatten, den in dem hydraulischen Verbraucher (4) herrschenden hydraulischen Druck zu erhöhen bzw. zu verringern, **dadurch gekennzeichnet, dass** es in der vorübergehenden und wiederholten Aktivierung eines ersten Regelmittels (8) zur Verringerung des Drucks und eines zweiten Regelmittels (9) zur Erhöhung des Drucks des hydraulischen Verbrauchers (4) als Funktion der Augenblicksableitung der Drehzahl der Turbine und des Augenblickswerts des Schlupfes zwischen der Drehzahl des Motors (3) und der Drehzahl der Turbine des Wandlers (5) besteht, wobei ein Leitungsdruckregler (13) betätigt wird, der einen Leitungsdruck an das Regelmittel (9) liefert, um den Druck zu erhöhen, wobei das Regelmittel (8) mit einem Ablassreservoir (15) verbunden ist.

2. Steuerverfahren nach Anspruch 1, **dadurch gekennzeichnet, dass** bei Nichtaktivierung der Regelmittel (8, 9) der hydraulische Druck abnimmt, wobei die Dauer der Aktivierung des zweiten Regelmittels (9), das eine Erhöhung des hydraulischen Drucks gestattet, als Funktion der Augenblicksableitung der Drehzahl der Turbine eingestellt wird, wobei seine Nichtaktivierungsdauer festgelegt ist.

3. Steuerverfahren nach Anspruch 1, **dadurch gekennzeichnet, dass** bei Nichtaktivierung der Regelmittel (8, 9) der hydraulische Druck abnimmt, wobei die Dauer der Nichtaktivierung des zweiten Regelmittels (9), das eine Erhöhung des hydraulischen Drucks gestattet, als Funktion der Augenblicksableitung der Drehzahl der Turbine eingestellt wird, wobei seine Aktivierungsdauer festgelegt ist.

4. Steuerverfahren nach einem der Ansprüche 1 bis 3, **dadurch gekennzeichnet, dass** bei Nichtaktivierung der Regelmittel (8, 9) der hydraulische Druck zunimmt, wobei das erste Regelmittel (8), das eine Verringerung des hydraulischen Drucks gestattet, als Funktion des Augenblicksschlupfwertes aktiviert wird.

5. Steuerverfahren nach Anspruch 2, **dadurch gekennzeichnet, dass** das Verfahren des Weiteren darin besteht, den Maximalwert zu bestimmen, der während einer vorbestimmten Dauer durch den Absolutwert der Augenblicksableitung der Drehzahl der Turbine, wenn dieser negativ ist, gemessen wird, wobei die Aktivierungsdauer des zweiten Regelmittels (9), das eine Erhöhung des hydraulischen Drucks gestattet:
- auf einen vorbestimmten Wert festgelegt wird, wenn der Maximalwert über einem vorbestimmten oberen Schwellwert liegt,
- bezüglich des vorbestimmten Werts erhöht wird, wenn der Maximalwert unter einem vorbestimmten unteren Schwellwert liegt,
- bezüglich des vorbestimmten Werts verringert wird, wenn der Maximalwert über dem unteren Schwellwert liegt und unter dem oberen Schwellwert liegt.

6. Steuerverfahren nach Anspruch 4, **dadurch gekennzeichnet, dass** das erste Regelmittel (8), das eine Verringerung des hydraulischen Drucks gestattet, aktiviert wird, wenn der Augenblickswert des Schlupfes größer wird als ein oberer Schwellwert (A + δA), und deaktiviert wird, wenn der Augenblickswert des Schlupfes kleiner wird als ein unterer Schwellwert (A - δA).

7. Steuerverfahren nach einem der vorhergehenden Ansprüche, **dadurch gekennzeichnet, dass** die Regelmittel (8, 9) zwei Elektroventile umfassen, wobei das eine (9) durch Aktivierung eine Erhöhung des Drucks in dem Verbraucher gestattet und das andere (8) durch Aktivierung eine Verringerung des Druckes in dem Verbraucher gestattet.

8. Vorrichtung zur Durchführung des Verfahrens nach einem der vorhergehenden Ansprüche, umfassend einen platzierten hydraulischen Drehmomentwandler (5), Motor (3), einen am Ausgang des Motors (3) einen hydraulischen Verbraucher, der das von dem Wandler (5) gelieferte Drehmoment überträgt, betätigbare Regelmittel (8, 9), die eine Erhöhung oder eine Verringerung des in dem hydraulischen Verbraucher herrschenden Drucks gestatten, Mittel zur Erfassung, während der Ausrückphase beim Anhalten, des Schlupfes zwischen der Drehzahl des Motors (3) und der Drehzahl der Turbine und Mittel (1) zur Berechnung der Augenblicksableitung der Drehzahl der Turbine des Wandlers (5), **dadurch gekennzeichnet, dass** sie Mittel (1) zum Steuern der Regelmittel als Funktion der Augenblicksableitung der Drehzahl der Turbine des Wandlers (5) und des Schlupfes umfasst und dass die Regelmittel (8, 9) zwei Elektroventile (8, 9) umfassen, die mit einem Versorgungskreis (14) verbunden sind, der den hydraulischen Verbraucher (4) versorgt, wobei eines (9) durch Aktivierung eine Erhöhung des Drucks in dem Verbraucher gestattet und das andere (8) durch Aktivierung eine Verringerung des Drucks gestattet.

9. Steuervorrichtung nach Anspruch 8, **dadurch gekennzeichnet, dass** die Elektroventile vom Ein-Aus-Typ sind und mit einem Leitungsdruckregler (13) verbunden sind, der mittels einer Steuereinheit des Getriebes (1) betätigt wird, so dass, wenn das Folgeelektroventil (8) versorgt wird (Position 1) ein Kreis (14) langsam durch den Kreis (11) entleert wird, der den Kreis (14) mittels eines kalibrierten Lochs (12) mit einem Reservoir (15) verbindet; und umgekehrt, wenn das Folgeelektroventil (9) versorgt wird (Position 1) der Kreis (14) durch den durch den Leitungsdruckregler (13) gelieferten Leitungsdruck über einen Kreis (10) versorgt wird.
